# EUROPEAN PATENT SPECIFICATION

(11) **EP 1 256 276 B1**
(45) Date of publication and mention of the grant of the patent: **20.08.2008**
(21) Application number: 01904379.3
(22) Date of filing: 09.02.2001
(51) Int. Cl.: A01N 25/00, A01N 33/12, A01N 37/44, A01N 47/44, A01C 1/08

(54) **METHOD OF TREATING SEEDS**
VERFAHREN ZUR BEHANDLUNG VON SAATGUT
PROCEDE DE TRAITEMENT DE GRAINES

(30) Priority: 10.02.2000 JP 2000033065
(43) Date of publication of application: 13.11.2002
(73) Proprietor: Sakata Seed Corporation, Yokohama 224 (JP)
(72) Inventor: KUBOTA, Mizuho, Yokohama-shi, Kanagawa 245-0012 (JP)
(74) Representative: Woods, Geoffrey Corlett
(86) International application number: PCT/JP2001/000960
(87) International publication number: WO 2001/058259

(56) References cited:
- EP-A2- 0 639 636
- JP-A- 3 173 809
- JP-A- 6 247 808
- JP-A- 7 033 609
- JP-A- 9 271 210
- JP-A- 11 069 913
- JP-A- 56 095 102
- JP-A- 62 215 501
- US-A- 5 950 362
- PATENT ABSTRACTS OF JAPAN vol. 1998, no. 02, 30 January 1998 (1998-01-30) & JP 09 271210 A (YAZAKI CORP), 21 October 1997 (1997-10-21)
- PATENT ABSTRACTS OF JAPAN vol. 1995, no. 05, 30 June 1995 (1995-06-30) & JP 07 033609 A (MITSUBISHI GAS CHEM CO INC), 3 February 1995 (1995-02-03)

## Description

### Technical Field

The present invention relates to a method for treating seeds. This treatment method enables disinfection of seeds infected with plant pathogens and acceleration of germination of the disinfected seeds.

### Background Art

Seed disinfection is a very useful means for preventing damage caused by plant pathogens, and various methods have been heretofore considered. At present, practically employed methods for seed disinfection include hot water immersion, heat treatment, and chemical treatment.

Hot water immersion is carried out by immersing seeds in hot water at 50 to 60°C for about 5 to 60 minutes, followed by cooling and drying. Heat treatment is carried out by heating dried seeds at a high temperature of about 70°C for 1 to several days.

Chemical treatment includes various forms, and known methods include: a method in which seeds are immersed in an aqueous solution of disinfectant or an organic solvent; a method which combines use of hot water immersion; a method in which seeds are powdered, coated or sprayed with a disinfectant; a method in which seeds are mixed in a pellet base or a film-coated base; and a method in which the aforementioned plurality of methods are combined. Currently used agents include a copper compound mainly composed of inorganic or organic coppers, a sulfur compound mainly composed of inorganic or organic sulfurs, hypochlorite, antibiotics, dithiocarbamate, polyhaloalkylthio, substituted benzene, dicarboximide, nonfungicidal anti-blast agent, organic phosphorus fungicide, isoprothiolane, probenazole, dichlomezin, benzimidazole, carboxyamide fungicide, acylalanine fungicide, N-heterocyclic ergosterol inhibitor, and guazatine.

Examples of literature on the related prior art include the following.
(1) Japanese Patent Application Laying-Open (kokai) No. 9-271210 describes a method in which seeds are washed with a surfactant to accelerate seed germination and Example 2 therein describes collected data on the influence (increment) of the use of cetyltrimethylammonium bromide (cationic) and Zwittergent 3-4 (amphoteric) on the germinating rate of seeds belonging to *Solanaceae.*
(2) "Act Agronomica Hungarica" (vol. 43 (1-2), pp. 93-102) describes the results of research on the disinfection effect on sunflower seeds infected with a fungus (e.g., *Alternaria*) and the germinating rate of the treated seeds using a fungicide in combination with ultrasonication or vacuum suction, i.e., it describes the reducing the fungicide by the above 2 treatments and the improving effect of ultrasonic cleaning on the germinating rate.
(3) Japanese Patent Application Laying-Open (kokai) No. 7-53995 describes a germicidal disinfectant cleaner composition comprising a cationic germicide, a metal chelating agent, and a nonionic surfactant and/or amphoteric surfactant as a general-purpose germicidal disinfectant cleaner composition and examples of a cationic germicide include a cationic surfactant and a biagunide disinfectant.
(4) Japanese Patent Application Laying-Open (kokai) No. 6-247808 describes a seed disinfectant composition comprising, as an active ingredient, an ergosterol biosynthesis inhibitor or the like and an antimicrobial agent, and describes in its examples that the composition is combined with benzalkonium chloride (a cationic surfactant) as an antimicrobial agent to disinfect seeds of rice and wheat.
(5) US 5,950,362 describes a method of enhancing germination of a seed in which seeds are immersed in an aqueous liquid including dissolved inert gas. The seeds are then sonicated at a frequency preferably between about 15 kHz and about 30 kHz for a period of between about 1 minute and about 15 minutes.

### Disclosure of the Invention

### (Problem to be solved by the invention)

The above-described methods have various drawbacks while exhibiting some effects on seed disinfection. In particular, serious drawbacks in seed disinfection are: a drawback in which a pathogen to be disinfected is limited by the type of agent used in chemical treatment; and a drawback in which a deterioration in a seed vigor or quality is caused by disinfection.

Agents used in chemical treatment are mostly targeted to sterilize a fungus and most agents do not exhibit any effect on a pathogen other than a fungus, for example, bacteria. Among various types of bacteriosis, for example, black rot (*Xanthomonas campestris* pv. *campestris*), bacterial spot diseases (*X. campestris* pv. *raphani*), and leaf spot diseases (*X. campestris* pv. *armoraciae*) of crucifers, and bacterial canker of tomato (*Clavibacter michiganensis* subsp. *michiganensis*) are pathogens that seriously damage crops; however, agents which are effective in disinfecting seeds infected with these pathogens are limited to hypochlorite, a copper compound or the like. These factors complicate disinfection of seeds infected with bacteria.

Many of the disinfection techniques are prone to adversely affect seeds. For example, the seed vigor is deteriorated by heating in hot water immersion. In this method, since seeds are immersed in hot water for a long period of time, seed coats of crucifer crops or leguminous crops are swollen and are likely to be torn. This deteriorates not just the vigor of seeds but also their quality. As with hot water immersion, heat treatment deteriorates the seed vigor. The disinfection effect of this method is lower than that of hot water immersion and the treating time is longer. Further, heat treatment is likely to lower the water content of seeds to below the lower limit of an adequate range and also to induce deterioration in the germinating rate or secondary dormancy of seeds. Chemical treatment is disadvantageously likely to cause phytotoxicity in seeds, depending on the types of agents and the dosage. For example, many agents containing the aforementioned hypochlorite or copper compound are prone to cause phytotoxicity such as deterioration in the germinating rate of seeds or physiological disturbance in seedling. In particular, hypochlorite generates a chlorine gas which is toxic to human organisms upon reaction with acid and, thus, requires extra care in handling. As is apparent from the foregoing, all the conventional methods for seed disinfection involve some drawbacks and are not necessarily satisfactory as a means for effectively preventing plant diseases

Regarding the techniques described in the above literature on the prior art, Japanese Patent Application Laying-Open (kokai) No. 7-53995 does not disclose seed disinfection and applicability to seeds is not elucidated, Japanese Patent Application Laying-Open (kokai) No. 9-271210 relates to a general cleaning operation for seeds but does not teach seed disinfection, and although the disclosure of Japanese Patent Application Laying-Open (kokai) No. 6-247808 disinfects seeds using agents, it uses plural types of special agents in combination and the target of treatment is limited to a fungus and the like and the treatment cannot be applied to black rot and leaf spot diseases of crucifers or bacterial canker of tomato and it is difficult to disinfect to the extent that the target microorganism is below the detection limit. Further, "Act Agronomica Hungarica" (vol. 43 (1-2), pp. 93-102) describes disinfection of fungi using ultrasonication in combination with a fungicide at a considerably high concentration although it does not provide a means for disinfecting black rot and leaf spot diseases of crucifers or bacterial canker of tomato with an agent at a low concentration.

The object of the present invention is to solve the above drawbacks in the conventional methods for seed disinfection and to provide a means for treating seeds that is effective for plant diseases including bacterial plant diseases such as the above-described black rot, leaf spot disease, and canker as well as mycotic plant diseases without lowering the seed vigor and the like.

In agriculture, the development of plant diseases can be a factor to significantly lower the production yield. There are several forms by which plant diseases propagate, and of those one important form is seed-borne propagation of diseases.

Nowadays, international trading is commonplace in the production and distribution of seeds and a further advance in international trading is also desired in the future. An obstacle to such international trading of seeds is the existence of seed-borne diseases.

There have been many reports in the past of diseases spreading to remote regions due to the transportation of seeds infected with diseases, resulting in enormous damage in regions in which such diseases had never before emerged.

In order to prevent the propagation of seeds infected with diseases, in many countries it is required by law to verify that seeds are not infected with any disease by a pathological assay at the time of domestic transportation or importation/exportation of seeds. International organizations such as ISHI (International Seed Health Initiative) aim at international unification of the manual describing the seed health testing method, and member countries including Japan will pathologically examine seeds and prevent the distribution of infected seeds to allow only healthy seeds to be distributed.

In general, seeds exist as a bag of seeds (a seed lot). In the pathological assay of seeds, a suitable amount of test seeds are removed from one seed lot depending on the types of crops and diseases and, in accordance with a predefined procedure, a pathogen is extracted and detected, or alternatively, a test is conducted to express a disease symptom and the like to investigate the presence of the pathogen. If even one infected seed is detected from among all the tested seeds, the seed lot is regarded as an infected seed lot.

It should be noted that distribution of the infected seed lot is prohibited regardless of the excellence of the variety, the quantity, the germination property or the like of the tested seed lot. Thus, the seed lot loses its commodity value, which economically damages the producers and the distribution intermediaries. Further, the capacity to supply seeds in the seed and nursery market is lowered and the agricultural producers in need of the seeds are also economically damaged.

One method for allowing the infected seeds to be distributed is development of a disinfecting technique which is capable of eliminating diseases from seeds to the extent that their health can be clearly demonstrated by the above specified pathological assay.

### (Means for solving the problem)

The present inventors have conducted concentrated studies in order to solve the problem and, as a result, have found that treatment of seeds with surfactants and the like enables not only seed disinfection but also acceleration of seed germination. The present invention has been completed based on the above finding.

More specifically, the present invention provides a method for treating seeds wherein seeds are cleaned with a solution containing at least one agent selected from an amine salt-type cationic surfactant, an alkylamine/ethylene oxide adduct, a quaternary ammonium salt-type cationic surfactant, an amino acid-type amphoteric surfactant, a betaine-type amphoteric surfactant, polyhexamethylene, biguanidine hydrochloride, chlorhexydine gluconate and chlorhexydine hydrochloride with a sound wave of 10 kHz to 100 kHz.

### Best Mode for Carrying out the Invention

The present invention is hereafter described in more detail.

According to the method for treating seeds of the present invention, seeds are cleaned with a solution containing an agent.

This treatment may enable disinfection of seeds infected with plant pathogens and may accelerate seed germination. The term "treatment" used herein refers to an operation which brings seeds into contact with an agent to exert the effect of the agent, and examples include immersion and cleaning. "Cleaning" is one embodiment of the above "treatment" and refers to an operation for imparting some physical force to seeds in order to enhance the effect upon contact of seeds with an agent.

The term "plant pathogens" refers to pathogenic factors which are capable of lowering or extinguishing the normal germination capacity of seeds and are capable of inducing diseases in germinated seedlings and plants, and examples include bacteria, fungi, viruses, other microorganisms, and nematodes. The term "contamination" refers to a state in which a plant pathogen is deposited on the surface of a seed, has penetrated or infiltrated inside the seed texture, or is mixed within the bag of seeds. The term "disinfection" generally refers to extinction of pathogenic microorganisms. In the present invention, however, it refers to: i) extinction of plant diseases (disinfection in the narrow sense); ii) discontinuation or lowering of the activity of plant diseases to block or inhibit proliferation (bacteriostasis, antimicrobe); iii) removal of plant diseases from seeds (disinfecting); and iv) conversion of seeds from a state of infection with a plant pathogen to a non-infected state. The phrase "acceleration of germination" refers to: i) enhancement of germination speed; ii) improvement of germinating rate; iii) enhancement of seedling vigor etc.; and iv) other preferable physical and physiological changes for seed germination.

Agents used in the present invention include a cationic surfactant as defined below, an amphoteric surfactant as defined below and a biguanide compound as defined below. The above-described agents may be used alone or in a combination of two or more.

Each agent is described below.

### (1) Cationic surfactant

The cationic surfactant is selected from:
1. Amine salt-type cationic surfactant:
   i) primary to tertiary amine salts, for example, salts comprising cations such as primary to tertiary alkylammonium ions having 1 to 3 alkyl groups having about 4 to 20 carbon atoms, such as dodecylammonium ion, ditetradecylammonium ion, dimethyldodecylammonium ion, didodecylmonomethylammonium ion, didodecylhexadecylammonium ion, and trioctylammonium ion, and anions such as fatty acid ions such as formate ion and acetate ion, chloride ion, bromide ion, phosphate ion, sulfate ion, and nitrate ion;
   ii) amine salts of ester-type tertiary amine, for example, salts of triethanolamine monoalkylate having a fatty acid residue having about 4 to 20 carbon atoms, such as triethanolamine monododecylate, which is neutralized by fatty acids such as formic acid and acetic acid, hydrochloric acid, hydrobromic acid, phosphoric acid, sulfuric acid, and nitric acid;
   iii) amine salts of amide-type tertiary amine, for example, salts comprising cations such as alkylamide ethyl diethylammonium ion having an alkyl group having about 4 to 20 carbon atoms, such as octadecylamide ethyldiethylammonium ion, and anions such as fatty acid ions such as formate ion and acetate ion, chloride ion, bromide ion, phosphate ion, sulfate ion, and nitrate ion;
   iv) polymers or immobilized products of amine salt-type cationic surfactants; and
   v) others, compounds having chemical structures and functions of amine salt-type cationic surfactants.
2. An alkylamine/ethylene oxide adduct, for example, dihydroxyethyl alkylamine having an alkyl group having about 4 to 20 carbon atoms, such as dihydroxyethyl dodecylamine.
3. Quaternary ammonium salt-type cationic surfactant:
   i) quaternary alkyl ammonium salts, for example, salts comprising cations such as quaternary alkylammonium ion having 4 alkyl groups having about 1 to 20 carbon atoms, such as hexadecyl trimethylammonium ion and didecyl dimethylammonium ion, and anions such as fatty acid ions such as formate ion and acetate ion, chloride ion, bromide ion, phosphate ion, sulfate ion, and nitrate ion, with didecyldimethylammonium chloride and didodecyldimethylammonium chloride being particularly preferred;
   ii) trialkylbenzylammonium salts, for example, salts comprising cations such as trialkylbenzylammonium ion having 3 alkyl groups having about 1 to 20 carbon atoms, such as dodecyldimethylbenzylammonium ion, and anions such as fatty acid ions such as formate ion and acetate ion, chloride ion, bromide ion, phosphate ion, sulfate ion, and nitrate ion, with decyldimethylbenzylammonium chloride, dodecyldimethylbenzylammonium chloride, and tetradecyldimethylbenzylammonium chloride being preferred;
   iii) alkylpyridinium salts, for example, salts comprising cations such as alkylpyridinium ion having an alkyl group having about 4 to 20 carbon atoms, such as hexadecylpyridinium ion, and anions such as fatty acid ions such as formate ion and acetate ion, chloride ion, bromide ion, phosphate ion, sulfate ion, and nitrate ion, for example, hexadecylpyridinium chloride;
   iv) benzalthonium chloride, 3-(trimethoxysilyl)propyldimethyl octadecylammonium chloride, stearamide ethyltriethylammonium chloride, stearamide ethyldiethylbenzylammonium chloride and the like;
   v) polymers and immobilized products of quaternary ammonium salt-type cationic surfactants, for example, polymers or immobilized products of compounds included in i) to iv) or poly[vinyl benzyl alkyl dimethyl ammonium chloride], ionene, polyoxyalkylene ammonium and the like; and
   vi) compounds having chemical structures and functions of quaternary ammonium salt-type cationic surfactants.

The concentration of a cationic surfactant used is not particularly limited and a preferable concentration range can be suitably determined depending on the variety of seed, the type of agent, the intended use and the like. When an object is disinfection, preferably, the type of diseases and the contamination level of the target of disinfection as well as the level (intensity) of disinfection effect to be attained and the like should be also considered in determining the concentration

Where carrot seeds and sunflower seeds are treated using dodecyldimethylbenzyl ammonium chloride so as to simultaneously obtain a disinfection effect and a germination-accelerating effect , the concentration range is preferably about 100 to 4,000 ppm in the case the treatment is done by cleaning for about 1 to 5 minutes.

When the object is only to obtain a disinfection effect, when the other conditions are the same the effect can be generally attained at a concentration of about 10 to 50% of that when the object is primarily a germination-accelerating effect, although it varies depending on the type of disease and contamination level of the target of disinfection, the level (intensity) of disinfection effect to be attained; a variety of seed, a type of agent and the like. For example, when cabbage seeds infected with black rot are disinfected using dodecyldimethylbenzyl ammonium chloride, a concentration range is preferably about 20 to 2,000 ppm in the case of cleaning for 5 minutes, and particularly preferably about 20 to 1,000 ppm in the case of sonic cleaning for 5 minutes. A preferable concentration range is even lower when disinfection is carried out using didecyldimethylammonium chloride, and the disinfection effect can be attained at a concentration range of about 5 to 1,000 ppm in the case of cleaning for 5 minutes and about 5 to 500 ppm in the case of sonic cleaning for 5 minutes.

### (2) Amphoteric surfactant

An amphoteric surfactant according to the present invention refers to a surfactant simultaneously having any two properties from among the properties of anionic, cationic, and nonionic surfactants.

The amphoteric surfactant is selected from:
i) amino acid-type amphoteric surfactants, for example, saponified products by alkali such as sodium of alkylamino monofatty acid and alkylamino difatty acid having an alkyl group having about 4 to 20 carbon atoms such as dodecylamino propionic acid and tetradecylamino diacetic acid, saponified products by alkali such as sodium of alkyldiaminoethyl glycine having an alkyl group having about 4 to 20 carbon atoms such as decyldiamino ethyl glycine or salt neutralized with hydrochloric acid etc., salt of alkyl polyaminoethyl glycine such as dodecylpolyaminoethyl glycine having two hydrogen atoms bound to a nitrogen atom of glycine being substituted with R(NHC₂H₄)n and RNHC₂ or H wherein R represents an alkyl group having about 4 to 20 carbon atoms and n is 1 to 4, which is neutralized by hydrochloric acid etc., and other compounds having chemical structures and functions of amino acid-type amphoteric surfactants with sodium decyl diaminoethyl glycine, sodium dodecyl diaminoethyl glycine, sodium tetradecyl diaminoethyl glycine, decyldiaminoethyl glycine hydrochloride, dodecyl diaminoethyl glycine hydrochloride, and tetradecyl diaminoethyl glycine hydrochloride being preferred; and
ii) betaine-type amphoteric surfactants, for example, trialkyl betaine having 3 alkyl groups having about 1 to 20 carbon atoms such as dodecyl dimethyl betaine, and alkyl dihydroxyalkyl betaine having an alkyl group having about 1 to 20 carbon atoms such as tetradecyl dihydroxyethyl betaine.

The concentration of an amphoteric surfactant used is not particularly limited and a preferable concentration range can be suitably determined depending on the variety of seed, the type of agent, the intended use and the like. When an object is disinfection, preferably, the type of diseases and the contamination level of the target of disinfection as well as the level (intensity) of disinfection effect to be attained and the like should be also considered in determining the concentration.

When the object is to simultaneously obtain a disinfection effect and a germination-accelerating effect when sunflower seeds are treated using dodecyl diaminoethyl glycine hydrochloride, the concentration range is preferably about 500 to 50,000 ppm in the case of immersion for 5 minutes and about 200 to 20,000 ppm in the case of cleaning for about 1 to 5 minutes.

When the object is only to obtain a disinfection effect, a preferable concentration range is determined approximately in accordance with the case where the object is to simultaneously obtain a disinfection effect and a germination-accelerating effect. For example, when cabbage seeds infected with black rot are disinfected using dodecyl diaminoethyl glycine hydrochloride, a concentration range is preferably about 500 to 50,000 ppm in the case of immersion for 5 minutes, about 100 to 20,000 ppm in the case of cleaning for 5 minutes, and, particularly, about 100 to 10,000 ppm in the case of sonic cleaning for 5 minutes.

When the object is only to obtain a germination-accelerating effect, the effect can be generally attained at a concentration of about 20 to 60% of that when the disinfection effect is the primary object under the same conditions, although it varies depending on a variety of seed, a type of agent and the like. For example, when carrot seeds are treated using dodecyl diaminoethyl glycine hydrochloride, a concentration range is preferably about 500 to 20,000 ppm in the case of immersion for 5 minutes and about 200 to 10,000 ppm in the case of cleaning for about 1 to 5 minutes.

### (3) Biguanide compound

The biguanide compounds is selected from polyhexamethylene-biguanidine hydrochloride, chlorhexydine gluconate, and chlorhexydine hydrochloride and polymers and immobilized products of the above biguanide compounds.

The concentration of a biguanide compound used is not particularly limited and a preferable concentration range can be suitably determined depending on the variety of seed, the type of agent, the intended use and the like. When an object is disinfection, preferably, the type of diseases and the contamination level of the target of disinfection as well as the level (intensity) of disinfection effect to be attained and the like should be also considered in determining the concentration.

When the object is to simultaneously obtain a disinfection effect and a germination-accelerating effect when sunflower seeds are treated using polyhexamethylene-biguanidine hydrochloride, the concentration range is preferably about 1,000 to 40,000 ppm in the case of immersion for 5 minutes and about 500 to 20,000 ppm in the case of cleaning for about 1 to 5 minutes.

When the object is only to obtain a disinfection effect, when other conditions are the same the effect can be generally attained at a concentration of about 10 to 50% of that when a germination-accelerating effect is the primary object, although it varies depending on the type of disease and the contamination level of the target of disinfection, the level (intensity) of disinfection effect to be attained, the variety of seed, the type of agent and the like. For example, when cabbage seeds which have been infected with black rot are disinfected using polyhexamethylene biguanidine hydrochloride, a concentration range is preferably about 500 to 20,000 ppm in the case of immersion for 5 minutes, about 100 to 10,000 ppm in the case of cleaning for 5 minutes, and, particularly, about 100 to 5,000 ppm in the case of sonic cleaning for 5 minutes.

Cleaning is not particularly limited as long as the method is effective in disinfecting seeds or accelerating germination, and examples thereof include cleaning by shaking and stirring using man power or a shaking apparatus and a stirring apparatus, flush cleaning, jet cleaning, vibration cleaning, turnover (barrel) cleaning, bubbling cleaning, vacuum cleaning, and ultravibration cleaning using equipment, and sonic cleaning using audible sound or ultrasound. The type of cleaning to be employed may be determined depending on the variety of seed to be treated. Seeds having thin and weak coats such as crucifer crops or leguminous crops are preferably subjected to sonic cleaning while seeds having strong coats such as carrots, rice, spinaches, and tomatoes may be subjected to any type of cleaning.

In sonic cleaning, the sonic frequency, the output of apparatuses, the irradiation time, the irradiation frequency and the like may be determined according to the variety of seed to be treated, the type of apparatus for sonic cleaning to be used, the type of pathogen and the like. The sonic frequency is in a range of 10 to 100 kHz with a range of 20 to 40 kHz being most preferred.

The variety of seed targeted by the treatment method of the present invention is not particularly limited and examples thereof include seeds of plants belonging to *Cruciferae, Solanaceae, Umbelliferae, Compositae, Gramineae, Leguminosae, Chenopodiaceae, Liliaceae, Violaceae,* and *Primulaceae.*

The method for treating seeds according to the present invention has the following advantages, which differ from the conventional method for seed disinfection and method for accelerating seed germination.
i) Disinfection effect can be attained concurrently with the maintenance of seed vigor.
   The treatment method of the present invention exhibits a high level of disinfecting properties against seed-borne diseases. At the same time, for seeds treated by the present treatment method, the risk of occurrence of adverse effects which are likely to be generated in seeds treated by the conventional disinfecting methods, such as a lowering of seed vigor and quality, induction of secondary dormancy, deterioration of germinating rate, and phytotoxicity such as physiological disturbance, is significantly lowered. Further, in the conventional disinfecting methods there is a high risk of lowering the storage property of treated seeds; however, the disinfection effect exhibited by seeds treated by the treatment method of the present invention and the maintenance of seed vigor are observed for a long period of time after the treatment. For example, performance of ultrasonic irradiation in a solution of didecyldimethy ammonium chloride (DDC) (200 ppm) for 5 minutes resulted in the disinfection of most fungi which had infected cabbage seeds while causing no change in the germinating rate. These effects were observed for 18 months after the treatment.
ii) A high disinfection effect can be attained at a low concentration. For example, a solution having an effective chlorine concentration of about 0.5% (5,000 ppm) is generally used in a conventional method for disinfecting bacteria and fungi, i.e., disinfection using hypochlorite. Similarly, a solution having an effective component concentration of about 1,000 to 2,000 ppm is generally used in a conventional disinfection method using a copper compound. In contrast, the treatment method of the present invention can provide an equivalent or higher disinfection effect at an equivalent or lower concentration of an agent compared to conventional disinfection methods. Further, combining various treatments for further amplifying the disinfection effect realizes a sufficient disinfection effect at a concentration of an agent that is a hundredth part or lower of that of the prior art technique.
iii) The object of disinfection covers a wide range. Agents used in the present treatment method exhibit a wider range of disinfection effects on various plant pathogens compared to agents used in the conventional disinfection methods. For this reason, a single pharmaceutical treatment can disinfect a plurality of plant pathogens in the infected seeds.
iv) There is a high level of safety for humans and the environment. For example, one pharamaceutical used in the treatment method of the present invention, i.e., benzalkonium chloride (alkyl benzyl ammonium chloride), is widely used as a disinfectant for injury and is extremely safe for human organisms. According to the treatment method of the present invention, a very small amount of an agent can provide a sufficient disinfection effect and, thus, the amount of agent used is very small.
v) Treating cost is excellent. A disinfection method which immerses seeds in a pharmaceutical solution generally requires an immersion time of 30 minutes to several hours or longer. In contrast, the treatment method according to the present invention can be efficiently carried out within a very short period of time, i.e., 1 to 5 minutes, compared to the conventional methods for seed disinfection. Since the agents used are inexpensive and the amount used is small, the cost of agents is very low.
vi) Change in the appearance and shape of seeds is slight. Seeds treated by the conventional disinfection methods are likely to undergo a change in their external appearance and shape during the treatment, for example, coloration, decolorization caused by bleaching, and damage on the seed coat and the like due to immersion in a solution for a long period of time. In contrast, the present treatment method does not cause coloration or decolorization after the treatment (except for the treatment by an iodine compound), and the seed coat and the like are less likely to be damaged since the time immersed in a solution is short.
vii) The seed vigor is accelerated. For example, seeds of plants belonging to *Umbelliferae,* such as carrots, comprise in their seed coats, embryo, or albumen, a germination inhibitor. Thus, normal germination is sometimes inhibited and suppressed even though seeds are under an appropriate condition for germination. Since the treatment method of the present invention removes a germination inhibitor, the germination capacity which is inherent to seeds is expressed and, as a result, the seed vigor is accelerated and the germination speed and the germinating rate are enhanced. Application of this treatment to such seeds realizes acceleration in the seed vigor as well as the disinfection effect.

The present invention will be described in more detail with reference to the following examples although the technical scope of the present invention is not limited to these examples.

### [Example 1]

The effectiveness of the treatment method according to the present invention on black rot was investigated by the following experiment. Black rot is a disease which develops in many crucifer crops, such as cabbage, broccoli, and Chinese cabbage, and one major infection route thereof is the seed-borne route. The International Seed Health Initiative (ISHI) cites black rot as one of the diseases with the highest priority for preparation of an international standard for the pathological assay.

For the purpose of disinfecting cabbage seeds infected with black rot bacteria, seeds were immersed in a solution containing didecyldimethylammonium chloride, alkyl diaminoethyl glycine (alkyl is mainly dodecyl and tetradecyl), or alkyl dimethylbenzyl ammonium chloride (alkyl is mainly dodecyl and tetradecyl), exposed to ultrasound for 5 minutes using "Bioraptor" (frequency 20 kHz, output 100 W, manufactured by Tosho Denki), and rinsed with water, followed by drying. Didecyldimethylammonium chloride (hereinafter referred to as "DDC") and alkyl dimethylbenzyl ammonium chloride (hereinafter referred to as "BKC") are cationic surfactants and alkyl diaminoethyl glycine hydrochloride (hereinafter referred to as "ADC") is an amphoteric surfactant.

These treated seeds were subjected to a germination test and a pathological test

The germination test was carried out in the following manner based on the seed testing manual of ISTA (International Seed Testing Association). Two sheets of filter paper (1, 10 mm x 100 mm) were put in a plastic box (110 mm x 100 mm x 21 mm) and 7.0 ml of pure water was supplied thereto. The treated seeds were inoculated on the filter paper and allowed to stand at 25°C under a light condition to observe the state seven days after inoculation. When adequate growth and development of cotyledon and adequate rooting were observed, it was considered as normal seedling, and the germinating rate was thereby determined. Investigation of the germinating rate was replicated four times to determine the rate of germination as well as the rate of abnormal germination and the rate of decayed seed.

The pathological test was carried out in the following manner by liquid plating assay (LP). Seeds were immersed in physiologic saline containing Tween 20 and shaken, followed by collection of a solution containing bacteria. The solution was diluted .stepwisely and spread on a semiselective medium for black rot bacteria and then cultured, and the number of colonies was counted. In the pathological test, the procedure from the treatment to the examination was replicated three times for each test area.

For comparison, the germinating rate and the like were also determined for a case without treatment, a case of hot water immersion at 55°C for 30 minutes, a case of ultrasonication with pure water, and a case of only immersion in a pharmaceutical solution without ultrasonication. Results of the germination test are shown in Table 1 and results of the pathological test are shown in Table 2

**Table 1**

| Treating agent | Treating concentration (ppm) | Treating method | Rate of germination | Rate of abnormal germination | Rate of decayed seed |
|---|---|---|---|---|---|
| Without treatment | - | - | 95.0 | 4.0 | 0 |
| Hot water immersion | - | Immersed in hot water at 55°C for 30 minutes | 82.0 | 11.0 | 1.0 |
| Pure water | - | Immersion only | 98.0 | 2.0 | 0 |
| | - | Ultrasonication | 98.0 | 1.0 | 1.0 |
| DDC | 10 | Immersion only | 99.5 | 0 | 0 |
| | 10 | Ultrasonication | 100.0 | 0 | 0 |
| | 40 | Immersion only | 100.0 | 0 | 0 |
| | 40 | Ultrasonication | 99.0 | 0.5 | 0 |
| BKC | 200 | Immersion only | 100 | 0 | 0 |
| | 200 | Ultrasonication | 98.5 | 1.0 | 0 |
| | 800 | Immersion only | 98.5 | 0 | 0 |
| | 800 | Ultrasonication | 97.0 | 2.5 | 0 |
| ADC | 1,000 | Immersion only | 99.5 | 0.5 | 0 |
| | 1,000 | Ultrasonication | 99.5 | 0.5 | 0 |
| | 4,000 | Immersion only | 97.0 | 1.0 | 0 |
| | 4,000 | Ultrasonication | 97.5 | 1.0 | 0 |

**Table 2**

| Treating agent | Treating concentration (ppm) | Treating method | Number of detected bacteria |
|---|---|---|---|
| Without | - | - | 1.9×10⁵ |
| treatment | | | |
| Hot water | - | Immersed in hot | ND |
| immersion | | water at 55°C for | |
| | | 30 minutes | |
| Pure water | - | Immersion only | 1.0×10⁵ |
| | - | Ultrasonication | 2.8×10⁴ |
| DDC | 10 | Immersion only | 1.9×10⁵ |
| | 10 | Ultrasonication | 1.3×10² |
| | 40 | Immersion only | 1.6 × 10⁵ |
| | 40 | Ultrasonication | ND |
| BKC | 200 | Immersion only | 4.5 × 10⁴ |
| | 200 | Ultrasonication | ND |
| | 800 | Immersion only | ND |
| | 800 | Ultrasonication | ND |
| ADC | 1,000 | Immersion only | 2.3 × 10⁴ |
| | 1,000 | Ultrasonication | 1.4 |
| | 4,000 | Immersion only | 4.7 × 10³ |
| | 4,000 | Ultrasonication | ND |

| | | | |
|---|---|---|---|
| ND: No bacterium was detected. | | | |

### [Example 2]

For the purpose of disinfecting cabbage seeds infected with black rot bacteria, seeds were immersed in a solution containing polyhexamethylene biguanidine hydrochloride (hereinafter referred to as "PHB"), exposed to ultrasound for 5 minutes using "Bioraptor" (frequency 20 kHz, output 100 W, manufactured by Tosho Denki), and rinsed with water, followed by drying.

These treated seeds were subjected to a germination test and a pathological test.

The germination test was carried out in the following manner based on the seed testing manual of ISTA. Two sheets of filter paper (1, 10 mm x 100 mm) were put in a plastic box (110 mm x 100 mm x 21 mm) and 7.0 ml of pure water was supplied thereto. The treated seeds were inoculated on the filter paper and allowed to stand at 25°C under a light condition to observe the state seven days after inoculation. When adequate growth and development of cotyledon and adequate rooting were observed, it was considered as normal seedling, and the germinating rate was thereby determined. Investigation of the germinating rate was replicate four times to determine the rate of germination as well as the rate of abnormal germination and the rate of decayed seed.

The pathological test was carried out in the following manner by LP. Seeds were immersed in physiologic saline containing Tween 20 and shaken, followed by collection of a solution containing bacteria. The solution was diluted stepwisely and spread on a semiselective medium for black rot and then cultured, and the number of colonies was counted. In the pathological test, the procedure from the treatment to the examination was replicated four times for each test area.

For comparison, the germinating rate etc. was also determined for a case without treatment, a case of hot water immersion at 55°C for 30 minutes, a case of ultrasonication with pure water, and a case of immersion only in a pharmaceutical solution without ultrasonication. Results of the germination test are shown in Table 3 and results of the pathological test are shown in Table 4.

**Table 3**

| Treating agent | Treating concentration (ppm) | Treating method | Rate of germination | Rate of abnormal germination | Rate of decayed seed |
|---|---|---|---|---|---|
| Without treatment | - | - | 86.5 | 12.0 | 1.5 |
| Hot water immersion | - | Immersed in hot water at 55°C for 30 minutes | 68.0 | 16.0 | 0 |
| Pure water | - | Ultrasonication | 87.0 | 7.5 | 4.0 |
| PHB | 1,000 | Ultrasonication | 87.0 | 7.0 | 0.5 |
| | 4,000 | Ultrasonication | 88.0 | 6.0 | 0 |

**Table 4**

| Treating agent | Treating concentration (ppm) | Treating method | Number of detected bacteria |
|---|---|---|---|
| Without treatment | - | - | 2.6×10⁵ |
| Hot water immersion | - | Immersed in hot water at 55°C for 30 minutes | ND |
| Pure water | - | Ultrasonication | 7.0×10⁴ |
| PHB | 1,000 | Ultrasonication | 6.3×10² |
| | 4,000 | Ultrasonication | ND |

| | | | |
|---|---|---|---|
| ND: No bacterium was detected. | | | |

### [Example 3]

The effectiveness of the treatment method according to the present invention on canker was investigated by the following experiment. Bacterial canker of tomato is a disease which develops in tomatoes and one major infection route thereof is the seed-borne route. ISHI cites canker as one of the diseases with the highest priority for preparation of an international standard for the pathological assay, as with black rot of crucifer.

Seeds which were artificially infected with bacterial canker of tomato were immersed in a solution containing alkyl dimethylbenzyl ammonium chloride (alkyl is mainly lauryl and myristyl), alkyl diaminoethyl glycine hydrochloride (alkyl is mainly lauryl and myristyl), and polyhexamethylene-biguanidine hydrochloride, exposed to ultrasound for 5 minutes using "Bioraptor" (frequency 20 kHz, output 100 W, manufactured by Tosho Denki), and rinsed with ion-exchange water (DW), followed by drying. The artificially-infected seeds were prepared in the following manner. Sterilized tomato seeds were immersed in a solution of bacterial canker and dried, followed by mixing with sterilized tomato seeds, thereby preparing the infected seeds.

Of the reagents used, alkyl dimethylbenzyl ammonium chloride (hereinafter referred to as "BKC") is a cationic surfactant, alkyl diaminoethyl glycine hydrochloride (hereinafter referred to as "ADC") is an amphoteric surfactant, and polyhexamethylene-biguanidine hydrochloride (hereinafter referred to as "PHB") is a biguanide compound.

These treated seeds were subjected to a pathological test.

The pathological test was carried out in the following manner by liquid plating assay (LP). Recovery was done in accordance with the method used in Example 1 from seeds using a phosphate buffer and the recovered solutions were diluted stepwisely and spread on a selective medium for canker to culture, and the number of colonies was counted.

For comparison, the pathological test was also carried out for a case where the artificially infected seeds were immersed in DW for 30 minutes, followed by rinsing with DW several times and a case where seeds were immersed in DW for 30 minutes, subjected to ultrasonication in DW, followed by rinsing with DW several times. Results of the pathological test are shown in Table 5.

**Table 5**

| Treating agent | Treating concentration (ppm) | Treating method | Presence or absence of pathogenic bacteria detected |
|---|---|---|---|
| Without treatment | - | - | TNTC |
| DW | - | Immersion | TNTC |
| | - | Ultrasonic cleaning | TNTC |
| BKC | 100 | Ultrasonic cleaning | ND |
| ADC | 4,000 | Ultrasonic cleaning | ND |
| PHB | 3,000 | Ultrasonic cleaning | ND |

| | | | |
|---|---|---|---|
| TNTC: Too numerous to count ND: No bacterium was detected, | | | |

### [Example 4]

Carrot seeds were immersed in a solution (1 liter) containing 1,000 ppm ADC (alkyl is mainly dodecyl and tetradecyl) and exposed to ultrasound for 1 minute using "Ultrasonic Cleaner" (frequency 28 kHz, output 75 W, manufactured by TGK). Thereafter, seeds were rinsed with water, dried, and then subjected to a germination test

The germination test was carried out in the following manner based on the seed testing manual of ISTA. Two sheets of filter paper (110 mm x 100 mm) were put in a plastic box (110 mm x 100 mm x 21 mm) and 6.0 ml of pure water was supplied thereto. The treated seeds were inoculated on the filter paper and allowed to stand at 20°C under a low light condition to observe the state five and ten days after inoculation. When 5 mm or longer rooting was observed, it was considered as germination and the germinating rate was then determined. Investigation of the germinating rate was replicated four times. Ten days after inoculation, an average body weight of individual germination (excluding seed coat) was also measured. Results thereof are shown in Table 6.

**Table 6**

| Test area | Average body weight (mg/individual) | Germinating rate 1 | Germinating rate 2 |
|---|---|---|---|
| Without treatment | 8.02 | 46 | 88 |
| Treatment 1 | 12.69*** | 67** | 92 |
| Treatment/ without treatment | 1.58 | - | - |

| | | | |
|---|---|---|---|
| Germinating rate 1: Germinating rate 5 days after inoculation Germinating rate 2: Germinating rate 10 days after inoculation *** and ** indicate significant differences P < 0.01 and P < 0.001 by t-examination, respectively. | | | |

As shown in Table 5, improvement in the germination speed was observed in the area with treatment compared to the area without treatment. The average body weight observed in the area with treatment was heavier by 58% than the area without treatment and improvement in the growth speed was observed. Similarly, the germinating rate was improved by 4%.

### [Example 5]

Sunflower seeds for animal feed were subjected to the following three types of treatments, followed by a germination test.

Treatment 1: Seeds were immersed in a solution (1 liter) containing 500 ppm BKC (alkyl is mainly dodecyl and tetradecyl) and exposed to ultrasound using "Bioraptor" (frequency 20 kHz, output 65 W, manufactured by Tosho Denki) for 5 minutes, and rinsed with water, followed by drying.

Treatment 2: Treatment was carried out in the same manner as in Treatment 1 except that ADC (alkyl is mainly dodecyl and tetradecyl) was used instead of BKC.

Treatment 3: Treatment was carried out in the same manner as in Treatment 1 except that PHB was used instead of BKC.

The germination test was carried out in the following manner based on the seed testing manual of ISTA. Two sheets of filter paper (110 mm x 100 mm) were put in a plastic box (110 mm x 100 mm x 21 mm) and 6.3 ml of pure water was supplied thereto. The treated seeds were inoculated on the filter paper and allowed to stand at 25°C under a lighting condition to observe the state one day and three days after inoculation. When a protruded radicle was observed, it was considered as germination and the germinating rate was then determined. Investigation of the germinating rate was replicate four times and the rates of germination and decayed seed were determined. Results thereof are shown in Table 6.

**Table 7**

| | Germinating rate 1 | Germinating rate 2 | Spoilage rate |
|---|---|---|---|
| Without treatment | 10 | 74 | 26 |
| Treatment 1 | 44*** | 89** | 5*** |
| Treatment 2 | 50*** | 91*** | 6*** |
| Treatment 3 | 38** | 87** | 5*** |

| | | | |
|---|---|---|---|
| Germinating rate 1: Germinating rate 1 day after inoculation Germinating rate 2: Germinating rate 3 days after inoculation ** and *** indicate significant differences P < 0.01 and P < 0.001, respectively, as a result of t-examination on germinating rates 1 and 2 and the spoilage rate for the area without treatment and each area with treatment. | | | |

As shown in Table 7, improvement in initial germination speed, improvement in germinating rate, and lowering in spoilage rate were observed for the areas of treatment 1, treatment 2, and treatment 3 compared to the area without treatment.

### Effect of the Invention

The present invention provides a novel method for treating seeds. This treatment method enables disinfection of seeds infected with plant pathogens and acceleration of germination of the disinfected seeds. Therefore, the treatment method of the present invention is a very useful technique in industrial applications.

## Claims

1. A method for treating seeds wherein seeds are cleaned with a solution containing at least one agent selected from an amine salt-type cationic surfactant, an alkylamine/ethylene oxide adduct, a quaternary ammonium salt-type cationic surfactant, an amino acid-type amphoteric surfactant, a betaine-type amphoteric surfactant, polyhexamethylene biguanidine hydrochloride, chlorhexydine gluconate and chlorhexydine hydrochloride with a sound wave of 10 kHz to 100 kHz.

2. The method for treating seeds according to claim 1 wherein seeds are treated with ultrasound.

3. The method for treating seeds according to clam 1 or 2 wherein cleaning is carried out for disinfecting bacterial plant diseases.

4. The method for treating seeds according to any one of claims 1 to 3 wherein the agent is at least one member selected from an amine salt-type cationic surfactant, an alkylamine/ethylene oxide adduct, and a quaternary ammonium salt-type cationic surfactant.

5. The method for treating seeds according to any one of claims 1 to 4 wherein the agent is at least one member selected from an amino acid-type amphoteric surfactant and a betaine-type amphoteric surfactant.

6. The method for treating seeds according to any one of claims 1 to 5 wherein the agent is at least one member selected from polyhexamethylene biguanidine hydrochloride, chlorhexydine gluconate, and chlorhexydine hydrochloride.

7. The method for treating seeds according to any one of claims 1 to 6 wherein the seeds are seeds of a plant selected from *Cruciferae, Solanaceae, Umbelliferae, Compositae, Gramineae, Leguminosae, Chenopodiaceae, Liliaceae, Violaceae* and *Primuloceae.*

8. The method for treating seeds according to claim 7 wherein the plant is selected from carrots, rice, spinach and tomatoes.

9. The method for treating seeds according to any one of claims 1 to 8 wherein the sound wave frequency is 20 to 40 kHz.

## Patentansprüche

1. Verfahren zum Behandeln von Saatgut, worin das Saatgut mit einer Lösung gereinigt wird, umfassend zumindest ein Mittel ausgewählt aus kationischem Tensid vom Aminsalztyp, Alkylamin/Ethylenoxid-Addukt, kationischem Tensid vom quaternären Ammoniumsalztyp, amphoterem Tensid vom Aminosäuretyp, amphoterem Tensid vom Betaintyp, Polyhexamethylenbiguanidinhydrochlorid, Chlorhexidingluconat und Chlorhexidinhydrochlorid mit Ultraschallwellen von 10 bis 100 kHz.

2. Verfahren zur Behandlung von Saatgut nach Anspruch 1, worin das Saatgut mit Ultraschall behandelt wird.

3. Verfahren zum Behandeln von Saatgut nach Anspruch 1 oder 2, worin das Reinigen zum Desinfizieren von bakteriellen Pflanzenerkrankungen durchgeführt wird.

4. Verfahren zum Behandeln von Saatgut nach einem der Ansprüche 1 bis 3, worin das Mittel zumindest ein Mitglied ist, ausgewählt aus einem kationischen Tensid vom Aminsalztyp, einem Alkylamin/Ethylenoxid-Addukt und einem kationischen Tensid vom quaternären Ammoniumsalztyp.

5. Verfahren zum Behandeln von Saatgut nach einem der Ansprüche 1 bis 4, worin das Mittel zumindest ein Mitglied ist, ausgewählt aus einem amphoteren Tensid vom Aminosäuretyp und einem amphoteren Tensid vom Betaintyp.

6. Verfahren zur Behandlung von Saatgut nach einem der Ansprüche 1 bis 5, worin das Mittel zumindest ein Mitglied ist, ausgewählt aus Polyhexamethylenbiguanidinhydrochlorid, Chlorhexidingluconat und Chlorhexidinhydrochlorid.

7. Verfahren zur Behandlung von Saatgut nach einem der Ansprüche 1 bis 6, worin das Saatgut Saatgut einer Pflanze ist, ausgewählt aus Cruciferae, Solanaceae, Umbelliferae, Compositae, Gramineae, Leguminosae, Chenopodiaceae, Liliaceae, Vtolaceae und Primuloceae.

8. Verfahren zur Behandlung von Saatgut nach Anspruch 7, worin die Pflanze ausgewählt ist aus Karotte, Reis, Spinat und Tomaten.

9. Verfahren zum Behandeln von Saatgut nach einem der Ansprüche 1 bis 8, worin die Schallwellenfrequenz 20 bis 40 kHz ist.

## Revendications

1. Procédé pour traiter des semences dans lequel des semences sont nettoyées avec une solution contenant au moins un agent choisi parmi un tensioactif cationique de type sel d'amine, un produit d'addition d'alkylamine/oxyde d'éthylène, un tensioactif cationique de type sel d'ammonium quaternaire, un tensioactif amphotère de type acide aminé, un tensioactif amphotère de type bétaïne, le chlorhydrate de polyhexaméthylène biguanidine, le gluconate de chlorhexidine et le chlorhydrate de chlorhexidine avec une onde sonore de 10 kHz à 100 kHz.

2. Procédé pour traiter des semences selon la revendication 1 dans lequel des semences sont traitées avec des ultrasons.

3. Procédé pour traiter des semences selon la revendication 1 ou 2 dans lequel le nettoyage est effectué pour désinfecter des maladies bactériennes de plante.

4. Procédé pour traiter des semences selon l'une quelconque des revendications 1 à 3 dans lequel l'agent est au moins un membre choisi parmi un tensioactif cationique de type sel d'amine, un produit d'addition d'alkylamine/oxyde d'éthylène, un tensioactif cationique de type sel d'ammonium quaternaire.

5. Procédé pour traiter des semences selon l'une quelconque des revendications 1 à 4 dans lequel l'agent est au moins un membre choisi parmi un tensioactif amphotère de type acide aminé et un tensioactif amphotère de type bétaïne.

6. Procédé pour traiter des Semences selon l'une quelconque des revendications 1 à 5 dans lequel l'agent est au moins un membre choisi parmi le chlorhydrate de polyhexaméthylène biguanidine, le gluconate de chlorhexidine et le chlorhydrate de chlorhexidine.

7. Procédé pour traiter des semences selon l'une quelconque des revendications 1 à 6 dans lequel les semences sont des semences d'une plante choisie parmi les crucifères, les solanacées, les ombellifères, les composées, les graminées, les légumineuses, les chénopodiacées, les liliacées, les violacées et les primulacées.

8. Procédé pour traiter des semences selon la revendication 7 dans lequel la plante est choisie parmi des carottes, le riz, l'épinard et des tomates.

9. Procédé pour traiter des semences selon l'une quelconque des revendications 1 à 8 dans lequel la fréquence de l'onde sonore est de 20 à 40 kHz.
